# FASCICULE DE BREVET EUROPEEN

(11) **EP 2 886 802 B1**
(45) Date de publication et mention de la délivrance du brevet: **10.04.2019**
(21) Numéro de dépôt: 13199025.1
(22) Date de dépôt: 20.12.2013
(51) Int. Cl.: F02C 7/28, F01D 9/04, F04D 29/08, F04D 29/52, F01D 11/00, F01D 25/24

(54) **Joint de virole interne de dernier étage de compresseur de turbomachine axiale**
Innenringdichtung der letzten Kompressorstufe eines axialen Turbotriebwerks
Gasket of the inner ferrule of the last stage of an axial turbomachine compressor

(43) Date de publication de la demande: 24.06.2015
(73) Titulaire: Safran Aero Boosters SA, 4041 Herstal (BE)
(72) Inventeur: Verhelst, Damien, 4000 Liège (BE)
(74) Mandataire: Lecomte & Partners

(56) Documents cités:
- EP-A1- 1 426 559
- EP-A1- 2 075 412
- EP-A2- 2 105 582
- DE-A1-102005 013 796
- DE-T2- 60 113 826
- US-B1- 6 364 606

## Description

### Domaine technique

L'invention a trait à un redresseur de turbomachine. Plus précisément, l'invention traite d'un redresseur de compresseur de turbomachine muni d'une virole interne avec un joint assurant une étanchéité avec un carter de la turbomachine. L'invention aborde également une turbomachine avec un joint disposé entre une virole et un carter de la turbomachine.

### Technique antérieure

Un turboréacteur comprend plusieurs niveaux tels une soufflante, des compresseurs, une chambre de combustion et des turbines. Ces compartiments sont fixés au carter intermédiaire de sorte à être tous reliés. Le carter intermédiaire est traversé par les flux annulaires qui circulent dans la turbomachine. Afin de limiter les fuites, des dispositifs d'étanchéité sont prévus aux interfaces entre le carter intermédiaire et les compartiments. En particulier, le compresseur basse pression qui est directement fixé au carter intermédiaire présente des joints au niveau de son carter extérieur et au niveau de la virole interne de son redresseur aval.

La virole interne du redresseur amont est fixée aux extrémités internes des aubes, et coopère de manière étanche avec une surface plane du carter intermédiaire. A cet effet, le redresseur comprend un joint circulaire en silicone plaqué contre la surface d'étanchéité du carter.

Le document EP 1 426 559 A1 divulgue une virole interne de redresseur de compresseur basse pression de turboréacteur axial. Le compresseur est fixé au carter intermédiaire de la turbomachine, la virole interne du dernier étage du compresseur est en contact du carter intermédiaire via un joint circulaire. Or, pendant le fonctionnement du turboréacteur, le joint circulaire est soumis à des vibrations, par exemple dues au fonctionnement propre de la turbomachine, à une ingestion, à un phénomène de pompage, à l'existence d'un balourd, à une perte d'aube de soufflante dit « fan blade off » en anglais. Ces vibrations déforment le joint radialement et axialement, réduisant ainsi l'étanchéité. Le joint peut également se décoller du carter intermédiaire, générant ainsi une fuite. Le joint ne respecte plus ni sa pression de contact et ni sa position nominale. Le document EP 2 105 582 A2 décrit un joint en Inconel entre un ensemble d'aube aval d'un compresseur et un carter de diffuseur. Un tel joint n'est pas approprié pour étanchéifier l'espace entre une virole interne et un carter intermédiaire.

### Résumé de l'invention

### Problème technique

L'invention a pour objectif de résoudre au moins un des problèmes présentés par l'art antérieur. Plus précisément, l'invention a pour objectif de préserver l'étanchéité d'un redresseur au niveau de la jonction entre sa virole interne et une surface d'étanchéité d'un carter lorsque le redresseur est soumis à des vibrations de la turbomachine.

### Solution technique

L'invention a trait à un redresseur de compresseur de turbomachine axiale, le redresseur comprenant une rangée annulaire d'aubes qui s'étendent radialement, une virole interne disposée aux extrémités internes des aubes et qui comporte un joint circulaire à un des bords amont ou aval de ladite virole de manière à assurer une étanchéité avec une surface d'étanchéité d'un carter intermédiaire de la turbomachine, remarquable en ce que la virole interne comprend une cavité dans laquelle est logé le joint.

Suivant un mode avantageux de l'invention, la cavité est formée, éventuellement intégralement, dans le matériau de la virole interne, ladite virole étant préférentiellement réalisée en un matériau polymère, plus préférentiellement en un matériau composite à matrice organique.

Suivant un mode avantageux de l'invention, la cavité est formée par une portion de la virole et un ou plusieurs éléments rapportés sur ladite virole et préférentiellement décrivant une forme généralement circulaire, éventuellement la virole interne et chaque élément rapporté sont réalisés en matériaux composites à matrice organique.

Suivant un mode avantageux de l'invention, le redresseur comprend un crochet qui forme la cavité de sorte à maintenir le joint contre la surface d'étanchéité du carter et contre la virole interne, préférentiellement la cavité forme une gorge annulaire ouverte essentiellement axialement.

Suivant un mode avantageux de l'invention, le redresseur comprend un épaulement annulaire délimitant axialement la cavité, préférentiellement l'épaulement est formé par une bride annulaire s'étendant radialement, éventuellement l'épaulement annulaire est formé par la virole annulaire et/ou par chaque élément rapporté.

Suivant un mode avantageux de l'invention, le redresseur comprend une portée généralement tubulaire délimitant radialement l'intérieur de la cavité, éventuellement la portée tubulaire est formée sur la virole annulaire et/ou sur chaque élément rapporté, préférentiellement au moins une portée tubulaire d'élément rapporté comprime radialement le joint contre la surface interne de la virole interne.

Suivant un mode avantageux de l'invention, le joint est majoritairement disposé axialement et/ou radialement à l'intérieur de la cavité, préférentiellement le joint comprend un matériau élastomère tel un matériau silicone.

Suivant un mode avantageux de l'invention, le joint présente une forme générale de tore, préférentiellement le profil de révolution du joint est généralement un rond, un triangle ou un quadrilatère tel un parallélogramme.

Suivant un mode avantageux de l'invention, le joint assure une étanchéité entre la virole interne et chaque élément rapporté, préférentiellement sur tout le tour de la virole interne.

Suivant un mode avantageux de l'invention, chaque élément rapporté est fixé à la virole interne, éventuellement chaque élément rapporté est emboîté ou collé à la virole interne, ou est fixé aux aubes à l'aide de moyens de fixation par engagement de matière.

Suivant un mode avantageux de l'invention, chaque élément rapporté s'étend sur la majorité de, éventuellement sur toute la longueur axiale de la virole interne, préférentiellement chaque élément rapporté est plaqué contre la surface interne de la virole interne.

Suivant un mode avantageux de l'invention, la longueur de la virole interne est supérieure au double de la corde de chaque aube mesurée selon ladite corde, éventuellement la longueur de chaque élément rapporté est supérieure à la corde de chaque aube mesurée selon ladite corde.

Suivant un mode avantageux de l'invention, le redresseur comprend une couche annulaire de matériau abradable disposée au bord amont ou aval de la virole interne qui est opposé axialement à celui qui comporte le joint circulaire, éventuellement la couche d'abradable s'étend axialement jusqu'à la matière délimitant la cavité.

Suivant un mode avantageux de l'invention, la virole interne et au moins un élément rapporté sont réalisés en des matériaux différents, préférentiellement la densité de chaque élément rapporté est inférieure à la densité de la virole interne.

Suivant un mode avantageux de l'invention, chaque élément rapporté est fixé sur la virole interne à l'aide de moyens de fixation par engagement de matière et/ou chaque élément rapporté épouse la surface interne de la virole interne.

Suivant un mode avantageux de l'invention, la portée tubulaire est disposée axialement et/ou radialement à l'intérieur de la surface externe de la virole interne.

Suivant un mode avantageux de l'invention, le joint s'étend axialement au-delà de la virole interne et/ou de chaque élément rapporté.

Suivant un mode avantageux de l'invention, la couche d'abradable est délimitée axialement à l'aide de la virole interne et/ou par chaque élément rapporté.

Suivant un mode avantageux de l'invention, le joint épouse majoritairement la surface interne de la cavité, préférentiellement totalement, et/ou le joint remplit majoritairement le volume interne de la cavité.

L'invention a également trait à une turbomachine axiale comprenant un carter muni d'une surface d'étanchéité, au moins un compresseur avec un redresseur qui coopère de manière étanche avec la surface d'étanchéité, remarquable en ce que le redresseur est conforme à l'invention, préférentiellement le joint est comprimé axialement entre le redresseur et la surface d'étanchéité du carter.

Suivant un mode avantageux de l'invention, un jeu axial J est ménagé entre le carter et la virole interne, le joint s'étendant axialement sur tout le jeu axial J, préférentiellement, la turbomachine comprend au moins une turbine, au moins une soufflante, le carter étant le carter intermédiaire de la turbomachine et supporte la majorité, éventuellement la totalité les efforts de chaque compresseur, de chaque turbine, de chaque soufflante.

### Avantages apportés

L'invention permet de maintenir efficacement le joint contre la surface d'étanchéité du carter. La cavité permet de loger le joint et de le renfermer contre la surface du carter. La solution ou la cavité est intégralement formée dans le matériau de la virole interne permet des réaliser une virole simple, venue de matière. La virole peut être réalisée par moulage, sa cavité peut être moulée directement et/ou usinée, ce qui permet de conserver des coûts de fabrication réduits.

Grâce à l'élément rapporté, une contrainte de compression radiale peut être appliquée au joint, ce qui améliore encore l'étanchéité. L'élément rapporté permet de soutenir le joint, il forme un support améliorant le positionnement, le maintien du joint. Il permet en outre de rigidifier le contact entre le joint et le carter. Au passage, l'élément rapporté améliore la rigidité de la virole interne et limite significativement ses déformations axiales et/ou radiales telles que son ovalisation. L'ajout de l'élément rapporté facilite la réalisation d'une cavité de forme complexe sans augmenter le coût de réalisation de la virole interne.

L'élément rapporté permet de préserver la légèreté du redresseur. En effet, il peut être réalisé en un matériau plus léger que la virole interne. Par exemple, la virole interne peut être réalisée en métal et l'élément rapporté peut être en polymère, tel un matériau composite.

Lors de la fabrication de la turbomachine, le compresseur est assemblé de sorte à former un ensemble qui est ensuite plaqué contre la carter intermédiaire. A ce moment, le joint circulaire est comprimé axialement contre la surface d'étanchéité du carter de la turbomachine. La compression du joint repose sur une chaîne de côtes incluant de nombreux éléments dont les aubes du redresseur. Ces dernières peuvent présenter des variations de positions de plus de 2,00 mm, ce qui augmente la marge que le joint circulaire doit pouvoir tolérer. En outre, le joint circulaire doit également s'adapter à un phénomène de dilatation différentielle.

### Brève description des dessins

La figure 1 représente une turbomachine axiale selon l'invention.
La figure 2 est un schéma d'un compresseur de turbomachine selon l'invention.
La figure 3 illustre le redresseur aval du compresseur en contact du carter de la turbomachine selon l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale est selon l'axe de rotation.

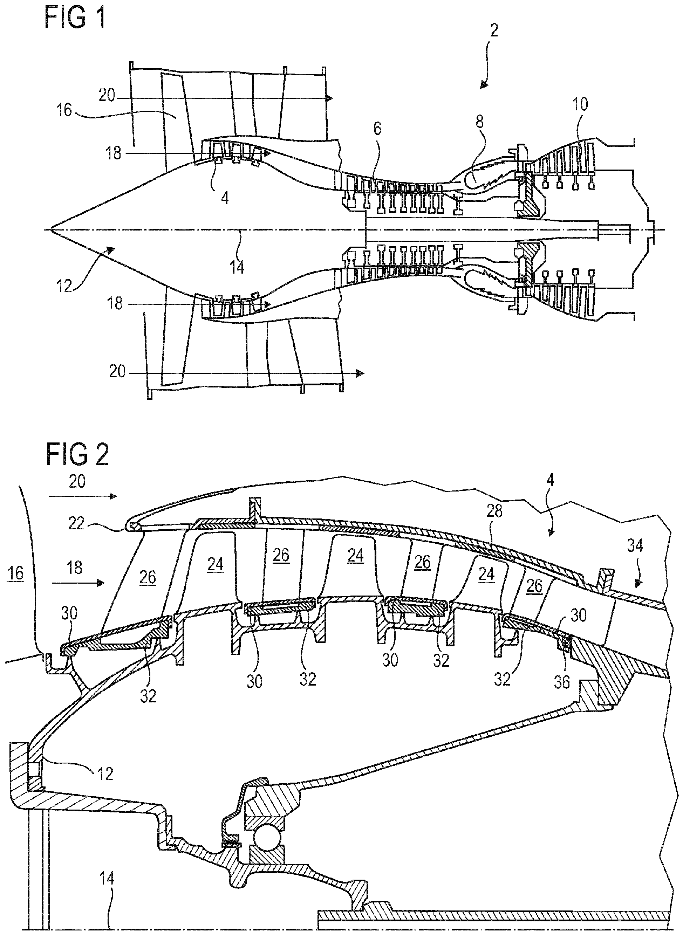

La figure 1 représente de manière simplifiée une turbomachine axiale. Il s'agit dans ce cas précis d'un turboréacteur double-flux. Le turboréacteur 2 comprend plusieurs niveaux en communication tels un premier niveau de compression, dit compresseur basse-pression 4, un deuxième niveau de compression, dit compresseur haute-pression 6, une chambre de combustion 8 et un ou plusieurs niveaux de turbines 10.

En fonctionnement, la puissance mécanique de la turbine 10 transmise via l'arbre central jusqu'au rotor 12 met en mouvement les deux compresseurs 4 et 6. Des moyens de démultiplication ou des arbres concentriques peuvent relier les turbines 8 aux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10 afin d'augmenter le rendement de la turbomachine.

Un ventilateur d'entrée communément désigné soufflante 16 ou fan est couplée au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. La turbomachine peut comprendre plusieurs soufflantes. Les flux primaire 18 et secondaire 20 sont des flux annulaires, ils sont canalisés par le carter de la turbomachine.

La turbomachine peut comprendre un carter, éventuellement un carter intermédiaire. Le carter intermédiaire assure une fonction de structure de fixation à laquelle, à la fois, les compresseurs 4 et 6, les turbines 8, la chambre de combustion 10, la soufflante 16 et les arbres sont fixés ou liés de sorte à en supporter au moins la majorité des efforts, préférentiellement tous les efforts.

La figure 2 est une vue en coupe d'un compresseur d'une turbomachine axiale 2 telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les aubes statoriques 26 s'étendent essentiellement radialement depuis un carter extérieur 28, et peuvent y être fixées à l'aide d'un axe. Elles sont régulièrement espacés les unes des autres, et présentent une même orientation angulaire dans le flux. Les redresseurs sont associés au fan 16 ou à une rangée d'aubes rotoriques pour redresser le flux d'air, de sorte à convertir la vitesse du flux en pression.

Avantageusemsent, les aubes d'une même rangée sont identiques. Eventuellement, l'espacement entre les aubes peut varier localement tout comme leur orientation angulaire. Certaines aubes peuvent être différentes du reste des aubes de leur rangée.

Chaque redresseur comprend une virole interne 30 qui est disposée aux extrémités internes des aubes statoriques 26 de la rangée correspondante. Les viroles internes 30 permettent de guider le flux primaire 18 lors de sa compression. Elles permettent également de maintenir les extrémités des aubes 26 les unes par rapport aux autres. Les redresseurs peuvent également comprendre des couches annulaires de matériau abradable 32, éventuellement appliquées sur chaque surface interne de virole interne 30. Ces couches d'abradable 32 coopèrent par abrasion avec des nervures annulaires radiales du rotor 12 afin d'assurer une étanchéité.

En aval, le compresseur peut être monté, éventuellement directement, sur le carter de la turbomachine, éventuellement sur le carter intermédiaire 34. Le compresseur peut être monté sur tout carter ou toute portion de carter de la turbomachine. Le compresseur peut être en contact du carter intermédiaire 34 au niveau de son carter extérieur 28 et au niveau du bord aval de la virole interne 30 de son redresseur aval. Des étanchéités annulaires sont prévues aux interfaces.

Dans cette optique, la virole interne 30 comprend un joint annulaire 36 ou joint circulaire 36 qui assure une étanchéité avec une surface d'étanchéité du carter, éventuellement le carter intermédiaire 34 de la turbomachine 2. Le joint 36 peut former un cordon étanche et peut comprendre un matériau élastomère tel un matériau silicone, éventuellement en majorité ou en totalité. Le matériau silicone peut être organique ou en résine. Le joint 36 peut être disposé à une extrémité axiale opposée de celle recevant la couche d'abradable 32.

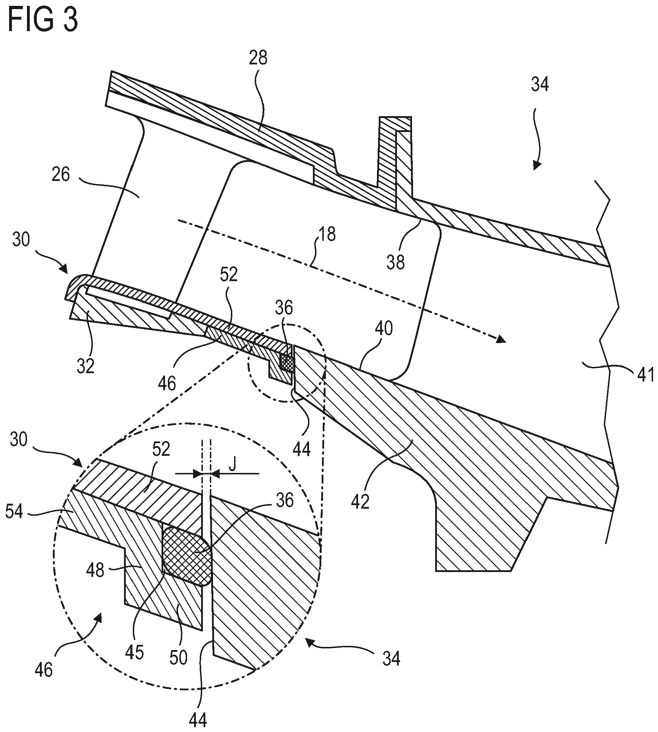

La figure 3 représente le redresseur aval du compresseur et le carter intermédiaire 34 de la turbomachine, ainsi qu'un agrandissement au niveau de l'interface d'étanchéité entre la virole interne 30 et le carter 34.

Le carter intermédiaire 34 peut être traversé par le flux primaire 18, il le guide à l'aide d'une paroi externe 38 et une paroi interne 40 qui sont reliées par des bras de carter 41 qui traversent radialement le flux. La paroi interne 40 peut être formée par un moyeu interne 42 auquel peuvent être articulés des arbres de la turbomachine. Axialement en regard du joint 36 de la virole interne 30, le carter comprend une surface d'étanchéité 44 par exemple généralement plane afin de réduire les frottements en cas de vibration axiale, et éviter un montage hyperstatique. La surface d'étanchéité 44 peut être sensiblement conique.

La virole interne 30 comprend une cavité 45 dans laquelle est logé le joint 36, par exemple majoritairement ou totalement. La cavité 45 peut être circulaire. La cavité 45 peut être formée, éventuellement intégralement, dans le matériau de la virole interne 30. La cavité 45 peut parcourir le tour de la virole 30, ou être formée de manière discontinue. La cavité 45 peut former un crochet, elle peut être ouverte essentiellement axialement vers la surface d'étanchéité 44 du carter 34. Elle peut présenter un profil général en lettre « U » pivoté vers le carter 34. La cavité 45 et la surface d'étanchéité 44 enveloppent majoritairement ou essentiellement totalement le joint. Ils peuvent l'encadrer sur au moins quatre faces.

La virole interne 30 peut comprendre un ou plusieurs éléments rapportés 46. Le ou les éléments rapportés 46 s'étendent le long du joint circulaire 36, selon sa circonférence. Chaque élément rapporté 46 peut présenter une forme généralement circulaire ou annulaire, la combinaison des éléments rapportés 46 est généralement circulaire. Chaque élément rapporté 46 peut être disposé à l'intérieur de la virole interne 30, et peut maintenir le joint circulaire 36, éventuellement contre la surface interne de la virole et/ou contre le carter intermédiaire 34. Chaque élément rapporté 46 peut exercer une pression axiale et/ou radiale contre le joint circulaire 36, éventuellement de sorte à augmenter la longueur axiale du joint 36 après compression.

La cavité 45 peut être formée par la combinaison d'une portion de virole interne 30, et du ou des éléments rapportés 46, la cavité 45 présentant une continuité de matière circulaire. Ou encore, les éléments rapportés 46 peuvent être insérés dans les discontinuités de matière de la virole interne, de sorte à former une cavité 45 généralement continue circulairement.

Le redresseur peut comprendre un épaulement 48. L'épaulement 48 peut être formée sur la virole interne 30 et/ou sur chaque élément rapporté 46. Chaque épaulement 48 s'étend radialement, est en contact du joint circulaire 36, et peut former une butée axiale pour le joint circulaire 36. Eventuellement, l'épaulement 48 ou la combinaison des épaulements s'étend sur la majorité ou toute l'épaisseur radiale du joint circulaire 36. Au moins un, ou chaque épaulement 48 peut être une bride annulaire s'étendant radialement. Chaque élément rapporté 46 peut être fixé à l'extrémité radiale interne de l'épaulement de la virole interne 30, par exemple par collage. Lorsque la virole interne 30 et chaque élément rapporté 46 présentent chacun un épaulement, ceux-ci sont dans le prolongement radial l'un de l'autre. L'élément rapporté 46 peut permettre de maintenir axialement le joint circulaire.

Le redresseur peut comprendre une portée généralement tubulaire 50 ou sensiblement conique, qui est éventuellement disposée axialement et/ou radialement à l'intérieur de la virole interne 30. La portée tubulaire 50 peut s'étendre sur la majorité, préférentiellement sur sensiblement la totalité de l'épaisseur axiale du joint circulaire 36, et ce sur tout le tour du joint. La portée tubulaire 50 peut être formée sur la virole interne 30 et/ou sur chaque élément rapporté 46. Elle peut présenter des discontinuités de matière et être tantôt formée par la virole, tantôt par le ou les éléments rapportés 46.

Le joint circulaire 36 peut être rapporté et collé sur la virole interne 30, ou être réalisé dans la cavité et y adhérer. Le joint 36 peut présenter une forme de bague ou de tore, il peut présenter un profil de révolution généralement rond, ou polygonal. Il peut présenter un profil de révolution en triangle, en quadrilatère tel un parallélogramme ou un carré. Le joint 36 peut assurer une étanchéité entre la virole interne 30 et chaque élément rapporté 46.

La virole interne 30 peut comprendre une cloison annulaire 52, par exemple d'épaisseur généralement constante. Son profil de révolution peut être incliné par rapport à l'axe de rotation de la turbomachine, éventuellement d'au moins 5°, préférentiellement d'au moins 10°, plus préférentiellement d'au moins 15°. La virole interne 30 peut comporter une rangée annulaire d'ouvertures (non représentées) dans lesquelles sont introduites les extrémités internes des aubes 26 en vue de leur fixation. La virole interne 30 forme une jonction annulaire axiale entre une portion de rotor et le carter intermédiaire 34. Sa longueur est supérieure à 130%, préférentiellement supérieure à 250% de la corde de l'aube 26, tous deux mesurés selon ladite corde au niveau de la jonction entre l'aube 26 et la virole interne 30.

Un jeu axial J est managé entre la surface d'étanchéité 44 du carter 34 et la virole interne 30. Préférentiellement, un même jeu axial égal est ménagé entre la surface d'étanchéité 44 du carter et chaque élément rapporté. Le joint circulaire 36 s'étend tout le long axialement du jeu J de sorte à former une barrière étanche. Le matériau du joint 36 permet également d'assurer un amorti des vibrations au niveau du jeu axial J.

Au moins un ou chaque élément rapporté 46 peut être fixé à la virole interne 30, par exemple par collage et/ou par emboîtement. Il peut comprendre une plateforme annulaire 54 épousant l'intérieur de la cloison 52 de la virole interne 30. La virole interne 30 et/ou chaque élément rapporté 46 et/ou les aubes 26 peuvent comprendre des moyens de fixation par engagement de matière matérialisant une fixation de chaque élément rapporté 46 sur la virole interne 30 et/ou sur les aubes 26, la virole interne 30 pouvant également être fixée aux aubes 26 par ces moyens.

La virole interne 30 et/ou chaque élément rapporté 46 peuvent être réalisés en métal, tel du titane, de l'aluminium. La virole interne 30 et/ou chaque élément rapporté 46 peuvent être réalisés par injection d'un polymère ou d'une résine chargée. L'un au moins d'eux, préférentiellement les deux peuvent être réalisés en matériaux composites à matrice organique. Ils peuvent comprendre une matrice en polyétherimide (PEI), en polyétheréthercétone (PEEK). Ils peuvent comprendre des fibres de carbone, des fibres de verre, des fibres de graphite. Les fibres peuvent présenter une longueur inférieure à 3,00 mm, préférentiellement inférieure à 1,00 mm, plus préférentiellement inférieure à 0,30 mm. Eventuellement, au moins un de ces éléments comprend une préforme fibreuse avec une matrice époxy.

L'invention peut également être appliquée à un compresseur haute pression, par exemple à une virole interne de redresseur amont du compresseur haute pression. Dans cette configuration, le redresseur amont comprend un joint élastomère disposé en amont de sa virole interne, le joint coopérant avec une surface d'étanchéité de la face aval du carter intermédiaire de la turbomachine. Le joint est également maintenu contre la virole et la surface d'étanchéité à l'aide d'au moins un élément rapporté.

## Revendications

1. Redresseur de compresseur de turbomachine axiale (2), le redresseur comprenant :
- une rangée annulaire d'aubes (26) qui s'étendent radialement,
- une virole interne (30) disposée aux extrémités internes des aubes (26) et qui comporte un joint circulaire (36) à un des bords amont ou aval de ladite virole (30) de manière à assurer une étanchéité avec une surface d'étanchéité (44) d'un carter intermédiaire (34) de la turbomachine (2), **caractérisé en ce que** la virole interne (30) comprend une cavité (45) dans laquelle est logé le joint (36), la cavité (45) étant formée par une portion de la virole (30) et un ou plusieurs éléments rapportés (46) sur ladite virole (30).

2. Redresseur selon la revendication 1, **caractérisé en ce que** la virole interne (30) et chaque élément rapporté (46) sont réalisés en matériaux composites à matrice organique.

3. Redresseur selon l'une des revendications 1 à 2, **caractérisé en ce qu'**il comprend un crochet qui forme la cavité (45) de sorte à maintenir le joint (36) contre la surface d'étanchéité (44) du carter et contre la virole interne (30), préférentiellement la cavité (45) forme une gorge annulaire ouverte essentiellement axialement.

4. Redresseur selon l'une des revendications 1 à 3, **caractérisé en ce qu'**il comprend un épaulement annulaire (48) délimitant axialement la cavité (45), préférentiellement l'épaulement (48) est formé par une bride annulaire s'étendant radialement, éventuellement l'épaulement annulaire (48) est formé par la virole annulaire (30) et/ou par chaque élément rapporté (46).

5. Redresseur selon l'une des revendications 1 à 4, **caractérisé en ce qu'**il comprend une portée généralement tubulaire (50) délimitant radialement l'intérieur de la cavité, éventuellement la portée tubulaire (50) est formée sur la virole annulaire (30) et/ou sur chaque élément rapporté (46), préférentiellement au moins une portée tubulaire d'élément rapporté (46) comprime radialement le joint (36) contre la surface interne de la virole interne (30).

6. Redresseur selon l'une des revendications 1 à 5, **caractérisé en ce que** le joint (36) est majoritairement disposé axialement et/ou radialement à l'intérieur de la cavité (45), préférentiellement le joint (36) comprend un matériau élastomère tel un matériau silicone.

7. Redresseur selon l'une des revendications 1 à 6, **caractérisé en ce que** le joint (36) présente une forme générale de tore, préférentiellement le profil de révolution du joint (36) est généralement un rond, un triangle ou un quadrilatère tel un parallélogramme.

8. Redresseur selon l'une des revendications 1 à 7, **caractérisé en ce que** le joint (36) assure une étanchéité entre la virole interne (30) et chaque élément rapporté (46), préférentiellement sur tout le tour de la virole interne (30).

9. Redresseur selon l'une des revendications 1 à 8, **caractérisé en ce que** chaque élément rapporté (46) est fixé à la virole interne (30), éventuellement chaque élément rapporté (46) est emboîté ou collé à la virole interne (30), ou est fixé aux aubes (26) à l'aide de moyens de fixation par engagement de matière.

10. Redresseur selon l'une des revendications 1 à 9, **caractérisé en ce que** chaque élément rapporté (46) s'étend sur la majorité de, éventuellement sur toute la longueur axiale de la virole interne (30), préférentiellement chaque élément rapporté (46) est plaqué contre la surface interne de la virole interne (30).

11. Redresseur selon l'une des revendications 1 à 10, **caractérisé en ce que** la longueur de la virole interne (30) est supérieure au double de la corde de chaque aube (26) mesurée selon ladite corde, éventuellement la longueur de chaque élément rapporté (46) est supérieure à la corde de chaque aube (26) mesurée selon ladite corde.

12. Redresseur selon l'une des revendications 1 à 11, **caractérisé en ce qu'**il comprend une couche annulaire de matériau abradable (32) disposée au bord amont ou aval de la virole interne (30) qui est opposé axialement à celui qui comporte le joint circulaire (36), éventuellement la couche d'abradable (32) s'étend axialement jusqu'à la matière délimitant la cavité.

13. Turbomachine axiale (2) comprenant un carter muni d'une surface d'étanchéité (44), au moins un compresseur (4 ; 6) avec un redresseur qui coopère de manière étanche avec la surface d'étanchéité (44), **caractérisée en ce que** le redresseur est conforme à l'une des revendications 1 à 12, préférentiellement le joint (36) est comprimé axialement entre le redresseur et la surface d'étanchéité (44) du carter.

14. Turbomachine (2) selon la revendication 13, **caractérisée en ce qu'**un jeu axial J est ménagé entre le carter et la virole interne (30), le joint (36) s'étendant axialement sur tout le jeu axial J, préférentiellement, la turbomachine (2) comprend au moins une turbine (10), au moins une soufflante (16), le carter étant le carter intermédiaire (34) de la turbomachine et supporte la majorité, éventuellement la totalité des efforts de chaque compresseur (4 ; 6), de chaque turbine (10), de chaque soufflante (16).

## Patentansprüche

1. Verdichter-Leitschaufelanordnung einer axialen Turbomaschine (2), wobei die Leitschaufelanordnung umfasst:
- eine ringförmige Reihe von Schaufeln (26), die sich radial erstrecken;
- einen Innenring (30), der an den inneren Enden der Schaufeln (26) angeordnet ist und eine kreisförmige Dichtung (36) an einer der stromaufwärtigen oder stromabwärtigen Seiten des Rings (30) umfasst, um Luftdichtigkeit mit einer Dichtungsfläche (44) eines Zwischengehäuses (34) der Turbomaschine (2) zu gewährleisten,
**dadurch gekennzeichnet, dass**
der Innenring (30) einen Hohlraum (45) umfasst, worin die Dichtung (36) untergebracht ist, wobei der Hohlraum (45) durch einen Abschnitt des Innenrings (30) und ein oder mehrere, zu dem Ring (30) hinzugefügte Elemente (46) gebildet ist.

2. Leitschaufelanordnung nach Anspruch 1, **dadurch gekennzeichnet, dass** der Innenring (30) und jedes hinzugefügte Element (46) aus Verbundwerkstoff mit einer organischen Matrix hergestellt sind.

3. Leitschaufelanordnung nach einem der Ansprüche 1 bis 2, **dadurch gekennzeichnet, dass** sie einen Haken umfasst, der den Hohlraum (45) bildet, um die Dichtung (36) gegen die Dichtungsfläche (44) des Gehäuses und gegen den Innenring (30) zu halten, wobei der Hohlraum (45) bevorzugt eine ringförmige Nut bildet, die im Wesentlichen axial geöffnet ist.

4. Leitschaufelanordnung nach einem der Ansprüche 1 bis 3, **dadurch gekennzeichnet, dass** sie einen ringförmigen Ansatz (48) umfasst, der den Hohlraum (45) axial begrenzt, wobei der Ansatz (48) bevorzugt durch einen sich radial erstreckenden ringförmigen Flansch gebildet ist, wobei der ringförmige Ansatz (48) gegebenenfalls durch den ringförmigen Ring (30) und/oder durch jedes hinzugefügte Element (46) gebildet ist.

5. Leitschaufelanordnung nach einem der Ansprüche 1 bis 4, **dadurch gekennzeichnet, dass** sie einen im allgemeinen röhrenförmigen Bereich (50) umfasst, der das Innere des Hohlraums radial begrenzt, wobei der röhrenförmige Bereich (50) gegebenenfalls an dem ringförmigen Ring (30) und/oder an jedem hinzugefügten Element (46) gebildet ist, wobei mindestens ein röhrenförmiger Bereich des hinzugefügten Elements (46) die Dichtung (36) radial gegen die Innenfläche des Innenrings (30) komprimiert.

6. Leitschaufelanordnung nach einem der Ansprüche 1 bis 5, **dadurch gekennzeichnet, dass** die Dichtung (36) zum größten Teil axial und/oder radial im Inneren des Hohlraums (45) angeordnet ist, wobei die Dichtung (36) bevorzugt ein Elastomermaterial, wie etwa ein Silikonmaterial, umfasst.

7. Leitschaufelanordnung nach einem der Ansprüche 1 bis 6, **dadurch gekennzeichnet, dass** die Dichtung (36) eine generelle Torusform aufweist, wobei das Rotationsprofil der Dichtung (36) bevorzugt generell ein Kreis, ein Dreieck oder ein Viereck, wie etwa ein Parallelogramm, ist.

8. Leitschaufelanordnung nach einem der Ansprüche 1 bis 7, **dadurch gekennzeichnet, dass** die Dichtung (36) Luftdichtigkeit zwischen dem Innenring (30) und jedem hinzugefügten Element (46) gewährleistet, bevorzugt ganz um den Innenring (30) herum.

9. Leitschaufelanordnung nach einem der Ansprüche 1 bis 8, **dadurch gekennzeichnet, dass** jedes hinzugefügte Element (46) an dem Innenring (30) befestigt ist, wobei jedes hinzugefügte Element (46) gegebenenfalls an dem Innenring (30) eingerastet oder haftend daran gebondet ist oder mittels Befestigungsmitteln durch Formschluss an den Schaufeln (26) befestigt ist.

10. Leitschaufelanordnung nach einem der Ansprüche 1 bis 9, **dadurch gekennzeichnet, dass** sich jedes hinzugefügte Element (46) über einen Großteil, gegebenenfalls die Gesamtheit, der axialen Länge des Innenrings (30) erstreckt, wobei jedes hinzugefügte Element (46) bevorzugt gegen die Innenfläche des Innenrings (30) platziert ist.

11. Leitschaufelanordnung nach einem der Ansprüche 1 bis 10, **dadurch gekennzeichnet, dass** die Länge des Innenrings (30) mehr als das Doppelte der Sehnenlinie jeder Schaufel (26) beträgt, gemessen gemäß besagter Sehnenlinie, wobei die Länge jedes hinzugefügten Elements (46) gegebenenfalls größer als die Sehnenlinie jeder Schaufel (26) ist, gemessen gemäß besagter Sehnenlinie.

12. Leitschaufelanordnung nach einem der Ansprüche 1 bis 11, **dadurch gekennzeichnet, dass** sie eine ringförmige Schicht von Einlaufmaterial (32) umfasst, die an der stromaufwärtigen oder der stromabwärtigen Seite des Innenrings (30) angeordnet ist, die derjenigen, welche die ringförmige Dichtung (36) umfasst, axial entgegengesetzt ist, wobei sich die Einlaufschicht (32) gegebenenfalls axial bis zu dem den Hohlraum begrenzenden Material erstreckt.

13. Axiale Turbomaschine (2), umfassend ein mit einer Dichtigkeitsfläche (44) versehenes Gehäuse, mindestens einen Verdichter (4; 6) mit einer Leitschaufelanordnung, die auf luftdichte Weise mit der Dichtungsfläche (44) zusammenwirkt, **dadurch gekennzeichnet, dass** die Leitschaufelanordnung einem der Ansprüche 1 bis 12 entspricht, wobei die Dichtung (36) bevorzugt axial zwischen der Leitschaufelanordnung und der Dichtungsfläche (44) des Gehäuses komprimiert ist.

14. Turbomaschine (2) nach Anspruch 13, **dadurch gekennzeichnet, dass** ein axiales Spiel J zwischen dem Gehäuse und dem Innenring (30) vorgesehen ist, wobei sich die Dichtung (36) axial über das gesamte axiale Spiel J erstreckt, bevorzugt umfasst die Turbomaschine (2) mindestens eine Turbine (10), mindestens ein Gebläse (16), wobei das Gehäuse das Zwischengehäuse (34) der Turbomaschine ist und den meisten, gegebenenfalls allen, Kräften jedes Verdichters (4; 6), jeder Turbine (10) und jedes Gebläses (16) widersteht.

## Claims

1. Axial turbine engine (2) compressor guide vane assembly, the guide vane assembly comprising:
- an annular row of blades (26) which extend radially,
- an internal collar (30) disposed at the internal ends of the blades (26) which comprises a circular gasket (36) on one of the upstream or downstream sides of said collar (30), so as to ensure airtightness with a sealing surface (44) of an intermediate casing (34) of the turbine engine (2),
**characterized in that**
the internal collar (30) comprises a cavity (45) in which the gasket is housed (36), the cavity (45) being formed by a portion of said internal collar (30) and one or more members (46) added to said collar (30).

2. Guide vane assembly according to claim 1, **characterized in that** the internal collar (30) and each added member (46) are made of composite material with an organic matrix.

3. Guide vane assembly according to one of claims 1 to 2, **characterized in that** it comprises a hook which forms the cavity (45), so as to hold the gasket (36) against the sealing surface (44) of the casing and against the internal collar (30), the cavity (45) preferably forming an annular groove substantially opened axially.

4. Guide vane assembly according to one of claims 1 to 3, **characterized in that** it comprises an annular shoulder (48) delimiting the cavity (45) axially, the shoulder (48) preferably being formed by an annular flange extending radially, the annular shoulder (48) possibly being formed by the annular collar (30) and/or by each added member (46).

5. Guide vane assembly according to one of claims 1 to 4, **characterized in that** it comprises a generally tubular face (50) delimiting the inside of the cavity radially, the tubular face (50) possibly being formed on the annular collar (30) and/or on each added member (46), preferably at least one added member (46) tubular face compressing the gasket (36) radially against the internal surface of the internal collar (30).

6. Guide vane assembly according to one of claims 1 to 5, **characterized in that** the gasket (36) is for the most part disposed axially and/or radially inside the cavity (45), the gasket (36) preferably comprising an elastomer material such as a silicone material.

7. Guide vane assembly according to one of claims 1 to 6, **characterized in that** the gasket (36) exhibits a generally toroidal form, the revolution profile of the gasket (36) preferably generally being a circle, a triangle or a quadrilateral such as a parallelogram.

8. Guide vane assembly according to one of claims 1 to 7, **characterized in that** the gasket (36) guarantees airtightness between the internal collar (30) and each added member (46), preferably all around the internal collar (30).

9. Guide vane assembly according to one of claims 1 to 8, **characterized in that** each added member (46) is fixed to the internal collar (30), each added member (46) possibly being interlocked or bonded adhesively to the internal collar (30) or fixed to the blades (26) with the help of fixing means by positive fitting.

10. Guide vane assembly according to one of claims 1 to 9, **characterized in that** each added member (46) extends over most of, possibly over all, the axial length of the internal collar (30), each added member (46) preferably being placed against the internal surface of the internal collar (30).

11. Guide vane assembly according to one of claims 1 to 10, **characterized in that** the length of the internal collar (30) is more than twice the chord line of each blade (26) measured according to said chord line, the length of each added member (46) possibly being greater than the chord line of each blade (26) measured according to said chord line.

12. Guide vane assembly according to one of claims 1 to 11, **characterized in that** it comprises an annular layer of abradable material (32) disposed on the upstream or downstream side of the internal collar (30) which is axially opposed to that which the circular gasket (36) comprises, the abradable layer (32) possibly extending axially up to the material delimiting the cavity.

13. Axial turbine engine (2) comprising a casing provided with a sealing surface (44), at least one compressor (4; 6) with a guide vane assembly which cooperates in an airtight manner with the sealing surface (44), **characterized in that** the guide vane assembly is according to one of claims 1 to 12, the gasket (36) preferably being compressed axially between the guide vane assembly and the sealing surface (44) of the casing.

14. Turbine engine (2) according to claim 13, **characterized in that** an axial play J is provided between the casing and the internal collar (30), the gasket (36) extending axially over the entire axial play J, the turbine engine (2) preferably comprises at least one turbine (10), at least one fan (16), the casing being the intermediate casing (34) of the turbine engine, and withstands most, possibly all, of the forces of each compressor (4; 6), each turbine (10) and each fan (16).
